# FASCICULE DE BREVET EUROPEEN

(11) **EP 2 799 657 B1**
(45) Date de publication et mention de la délivrance du brevet: **12.08.2015**
(21) Numéro de dépôt: 14163475.8
(22) Date de dépôt: 03.04.2014
(51) Int. Cl.: E06B 9/42, E06B 9/58

(54) **Dispositif de guidage, toile de store de protection solaire et ensemble équipés d'un tel dispositif de guidage**
Führungsvorrichtung, Sonnenschutztuch und Anordnung ausgesattet mit dieser Führungsvorrichtung
Guiding device, fabric of a solar protection device, and assembly provided with such a guiding device

(30) Priorité: 04.04.2013 FR 1353053
(43) Date de publication de la demande: 05.11.2014
(73) Titulaire: Serge Ferrari SAS, 38110 Saint Jean de Soudain (FR)
(72) Inventeur: Saiz, Carlos, 73190 Challes les eaux (FR)
(74) Mandataire: Cabinet Laurent & Charras

(56) Documents cités:
- EP-A1- 0 818 602
- EP-A1- 2 335 956
- WO-A1-03/048497
- DE-U1- 7 832 604

## Description

### DOMAINE TECHNIQUE

La présente invention se rapporte au domaine du guidage de nappes textiles formant store ou de moustiquaire par rapport à un châssis. Un tel guidage est donc réalisé au niveau des lisières longitudinales d'une nappe textile et permet d'empêcher une éventuelle sortie de la lisière par rapport au châssis.

L'invention vise plus particulièrement un dispositif de guidage destiné à être solidarisé avec la lisière de la nappe textile et un store ou moustiquaire ainsi équipé.

### TECHNIQUES ANTERIEURES

De façon générale, les dispositifs de guidage permettant de maintenir en position la lisière d'un store dans son châssis se présentent sous la forme d'éléments rapportés à la surface de la nappe textile et thermocollés au niveau de la lisière. De tels dispositifs de guidage ont notamment été décrits dans les documents US 2012/0325416 et EP2335956 A1. Dans ce cas, le dispositif de guidage comporte une bande de textile en polyester thermocollée à la surface de la nappe textile généralement formée par un tissu enduit de polychlorure de vinyle (PVC).

Cependant, de tels dispositifs de guidage génèrent au niveau de la lisière de la nappe textile une surépaisseur, qui même si elle est minime, est très gênante lors de l'enroulement d'une telle nappe textile.

En effet la surépaisseur va engendrer localement une variation du périmètre de la spirale que forme la nappe textile. Il se crée des plis disgracieux à la surface de la nappe textile lorsqu'elle est enroulée, et ces plis restent visibles et irreversibles lorsque celle-ci est déployée.

Ainsi, l'objectif de l'invention est de permettre au moins localement, l'intégration du dispositif de guidage dans l'épaisseur de la nappe textile. Un tel agencement permet alors d'éviter les variations de vitesse d'enroulement de la nappe textile entre les lisières et notamment une zone centrale de la nappe textile.

### EXPOSE DE L'INVENTION

L'invention concerne donc un dispositif de guidage destiné à être solidarisé avec une lisière d'une nappe textile dont les fils sont enduits d'un premier matériau thermoplastique, le dispositif de guidage permettant de former une ralingue, et comportant :
- une bande textile ;
- des éléments disjoints de guidage rapportés au niveau d'une première lisière de ladite bande textile ;
- une zone de solidarisation avec la nappe textile ;
Selon l'invention, le dispositif de guidage se caractérise en ce que la zone de solidarisation est formée par un tissu ajouré comportant un second matériau thermoplastique d'enduction, le second matériau thermoplastique étant thermosoudable avec le premier matériau thermoplastique recouvrant les fils de la nappe textile et en ce que le tissu ajouré comporte des zones ajourées permettant le fluage du premier matériau thermoplastique de la nappe textile.

Autrement dit, la zone de solidarisation du dispositif de guidage peut être thermosoudée directement avec la nappe textile. La présence d'un intermédiaire de collage entre ces deux éléments est proscrite. De plus, une fois thermosoudée la zone de solidarisation du dispositif de guidage peut être intégrée dans l'épaisseur de la nappe textile de façon à ne pas créer de surépaisseur au niveau de la lisière de cette nappe textile.

En effet, une telle nappe textile est formée généralement par le tissage de fils gainés générant de l'embuvage. Un tel embuvage produit alors des interstices remplis d'air que le second matériau thermoplastique du tissu ajouré peut venir remplir au moins partiellement.

Les premier et second matériaux thermoplastiques peuvent être de nature analogue ou différente et être notamment choisis parmi le groupe comportant le polychlorure de vinyle (PVC), les silicones et les polymères fluorés tels que l'ECTFE, ETFE, PVDF, PFA, FEP, THV.

Par ailleurs, le tissu ajouré s'étend également à l'extérieur de la zone de solidarisation avec la nappe textile. La faible épaisseur du tissu ajouré permet de conférer une grande souplesse au dispositif de guidage et de former sensiblement une charnière dont l'axe de rotation est parallèle à la lisière de la nappe textile.

Avantageusement, un fil de couleur du tissu ajouré peut matérialiser cette zone formant charnière de façon à faciliter l'opération de thermo-soudage entre la nappe textile et le tissu ajouré.

Un tel dispositif de guidage peut être réalisé de différentes façons et notamment, se présenter sous la forme d'un textile monolithique ou de plusieurs textiles solidarisés entre eux.

Ainsi, selon un premier mode de réalisation, la zone de solidarisation peut être agencée au niveau d'une seconde lisière de la bande textile opposée à la première lisière, la bande textile étant au moins partiellement constituée par le tissu ajouré.

Dans ce cas, le dispositif de guidage présente une bande textile monolithique servant à la fois de support pour les éléments disjoints de guidage et de zone de solidarisation avec la nappe textile.

Selon un second mode de réalisation, la bande textile et le tissu ajouré peuvent être deux organes distincts solidarisés entre eux.

Dans ce cas, la bande textile et le tissu ajouré peuvent être solidarisés par thermocollage. Un intermédiaire de collage peut alors être positionné entre les deux surfaces en regard de la bande textile et du tissu ajouré.

De même, le tissu ajouré peut être confectionné de diverses manières.

Selon un mode de réalisation particulier, le tissu ajouré peut comporter une pluralité de fils comportant chacun une âme recouverte d'une gaine, la gaine étant formée par le second matériau thermoplastique.

Ainsi, le tissu ajouré est obtenu en tissant entre eux des fils préalablement recouverts d'une gaine. L'âme textile est dans ce cas avantageusement réalisée par des fils de polyester.

En pratique, le tissu ajouré peut comporter une pluralité de joncs formés intégralement par le second matériau thermoplastique. Dans ce cas, les joncs sont ainsi dépourvus d'une âme textile.

Bien entendu, il est également envisagé de combiner à la fois des fils gainés tels que précédemment décrits et agencés par exemple dans un sens chaîne ou trame, avec des joncs agencés dans un sens opposé trame ou chaîne. La gaine des fils et les joncs sont dans ce cas formés dans un même matériau correspondant au second matériau thermoplastique.

Selon un autre mode de réalisation, le tissu ajouré peut comporter une couche d'enduction rapportée sur des fils, ladite couche d'enduction étant formée par le second matériau thermoplastique.

Dans cette autre variante le tissu ajouré est obtenu en rapportant une couche d'enduction sur des fils tissés ou juxtaposés, et ce au niveau d'au moins une face des fils. Une telle couche d'enduction peut ainsi être thermosoudée avec la nappe textile.

Par suite, le tissu ajouré peut être formé de diverses manières et consister en une étoffe tissée ou non tissée.

Avantageusement, le tissu ajouré peut comporter une pluralité de fils tissés entre eux. Dans ce cas, le tissu ajouré est obtenu par tissage de la pluralité de fils.

Par ailleurs, les zones ajourées du tissu ajouré peuvent être réalisées de diverses manières. En effet, elles peuvent être obtenues directement lors du tissage des fils en effectuant un tissage espacé des fils de chaîne et/ou de trame.

De telles zones ajourées peuvent également être obtenues par un procédé de découpage et enlèvement de matière au moyen d'un emporte-pièce supprimant localement une zone de tissu ajouré. Le tissu ajouré présente dans ce cas un tissage serré des fils de trame et/ou de chaîne.

Selon une variante de l'invention, le tissu ajouré peut être formé par une grille ajourée.

Une telle grille ajourée peut en effet être obtenue en superposant selon au moins deux directions des fils parallèles.

L'invention concerne également une toile de store de protection solaire caractérisée en ce qu'elle comporte au moins un dispositif de guidage tel que précédemment décrit, et en ce que, au moins au niveau de la zone de solidarisation, le tissu ajouré du dispositif de guidage est intégré dans l'épaisseur de la nappe textile.

De telles toiles de store de protection solaire peuvent être utilisées comme store à déroulement vertical ou sensiblement horizontal tel un store banne.

Le tissu ajouré du dispositif de guidage ne génère alors aucune surépaisseur au niveau de la lisière de la nappe textile. Ainsi, au niveau de la zone de solidarisation avec la nappe textile, les trous du tissu ajourés sont en partie remplis par le premier matériau thermoplastique des fils de la nappe textile. Un tel agencement permet ainsi de supprimer la formation de pli à la surface de la nappe textile.

L'invention concerne également un ensemble formant store banne caractérisé en ce qu'il comporte une toile de protection solaire telle décrite précédemment, la toile étant enroulée sur un axe, et des moyens de mise en tension transversale permettant de guider les éléments disjoints de guidage de la toile tout en assurant un effort de traction sur la toile.

Autrement dit, lors de l'enroulement de la toile de store autours de son axe, les moyens de mise en tension exercent sur la toile une force de traction visant à éliminer tout pli à la surface de la toile. De tels moyens de mise en tension sont donc avantageusement positionnés à proximité de l'axe d'enroulement de la toile de store.

### DESCRIPTION SOMMAIRE DES FIGURES

La manière de réaliser l'invention, ainsi que les avantages qui en découlent, ressortiront bien de la description du mode de réalisation qui suit, donné à titre indicatif mais non limitatif, à l'appui des figures dans lesquelles :
- la figure 1 est une vue de face d'un dispositif de guidage conforme à l'invention ;
- les figures 2 et 3 représentent des vues en coupe transversale de deux variantes d'un dispositif de guidage et de stores de protection solaire ainsi équipés, conformément à l'invention ;
- les figures 4 et 5 représentent quant à elles des vues en coupe transversale de deux variantes de tissu ajouré, conformément à l'invention ;
- les figures 6 et 7 représentent en vue de face d'une autre variante d'un dispositif de guidage conformes à l'invention ;
- la figure 8 est une vue en coupe transversale d'une autre variante de tissu ajouré d'un dispositif de guidage conforme à l'invention ;
- la figure 9 est une vue en perspective d'une toile de store équipée d'un dispositif de guidage conforme à l'invention ;
- la figure 10 est une vue de dessus d'un ensemble formant store banne comportant une toile de store conforme à l'invention.

### DESCRIPTION DETAILLEE DE L'INVENTION

Comme déjà évoqué, l'invention concerne un dispositif de guidage et un store de protection solaire équipé d'un tel dispositif de guidage.

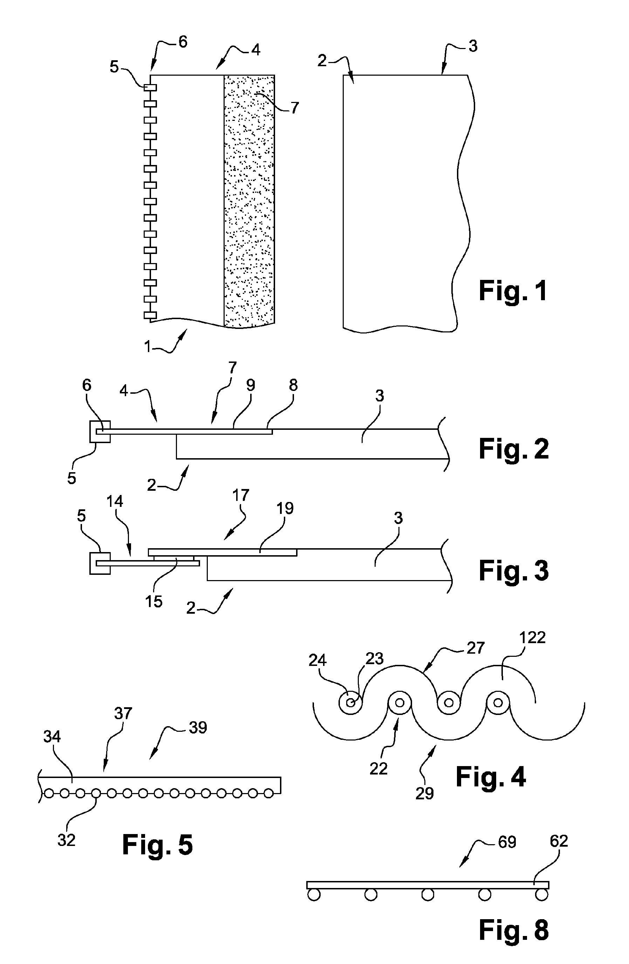

Tel que représenté à la figure 1, le dispositif de guidage **1** comporte une bande textile **4** sur laquelle sont rapportés des éléments disjoints de guidage **5** au niveau d'une première lisière **6.** De tels éléments disjoints de guidage **5** peuvent notamment être formés par une spirale en polyamide cousue avec la bande textile **4** ou encore par un fil muni d'une pluralité de boules régulièrement espacées les unes des autres, un tel fil étant également cousu avec la bande textile **4.**

Par ailleurs, un tel dispositif de guidage **1** comporte une zone de solidarisation **7** destinée à coopérer avec une nappe textile **3** au niveau d'une de ses lisières **2.**

Une telle zone de solidarisation **7** est formée par un tissu ajouré d'un second matériau thermoplastique directement thermosoudable avec un premier matériau thermoplastique recouvrant les fils de la nappe textile **3.**

Telle que représentée à la figure 2, la zone de solidarisation **7** est formée par un tissu ajouré **9.** Une telle zone de solidarisation **7** est agencée au niveau d'une seconde lisière **8** de la bande textile **4.** Dans ce cas, le second matériau thermoplastique formant l'enduction du tissu ajouré **9** peut, dans une première variante, être positionné de manière locale au niveau de cette seconde lisière **8,** et dans une seconde variante, s'étendre sur toute la surface de la bande textile **4.**

Tel que représenté, un tel dispositif de guidage est, une fois assemblé avec la nappe textile 3, intégré dans son épaisseur.

En effet, la présence d'air dans la nappe textile **3** permet de laisser des interstices pour que le second matériau thermoplastique flue à l'intérieur du volume occupé par la nappe textile **3.**

Tel que représenté à la figure 3, le dispositif de guidage peut également être formé par l'assemblage de la bande de textile **14** et un tissu ajouré **19** disjoint. Un tel assemblage peut notamment être réalisé par thermocollage au moyen d'un intermédiaire **15** positionné entre les deux éléments à thermo-coller. Dans ce cas, le tissu ajouré **19** peut également s'étendre en dehors de la zone de solidarisation **17.** Par ailleurs, les matériaux utilisés pour former la bande textile **14** et le tissu ajouré **19** peuvent être différents et non thermosoudables entre eux.

Cependant, et comme précédemment illustré, la zone de solidarisation **17** est, une fois assemblée avec la nappe textile **3,** intégrée à l'intérieur de l'épaisseur de cette nappe textile **3.**

Telle que représentée à la figure 4, la zone de solidarisation **27** peut être formée par un tissu ajouré **29** présentant une pluralité de fils **22.** De tels fils **22** comportent alors chacun une âme **23** recouverte d'une gaine **24.** Cette gaine **24** est alors formée dans le second matériau thermoplastique compatible par thermosoudage avec le premier matériau thermoplastique de la nappe textile.

De plus, le tissu ajouré **29** peut également comporter une pluralité de joncs **122** formés intégralement par le second matériau thermoplastique. De tels joncs **122** sont ici représentés dans un sens trame tandis que les fils gainés **22** sont eux agencés dans un sens chaîne cependant une configuration inverse peut également être envisagée.

Selon un autre mode de réalisation, et tel que représenté à la figure 5, la zone de solidarisation **37** peut également être formée par un tissu ajouré **39** dans lequel des fils **32** sont tissés puis recouverts d'une couche d'enduction **34** du second matériau thermoplastique. De même que précédemment, la couche d'enduction **34** est thermosoudable avec le premier matériau thermoplastique de la nappe textile.

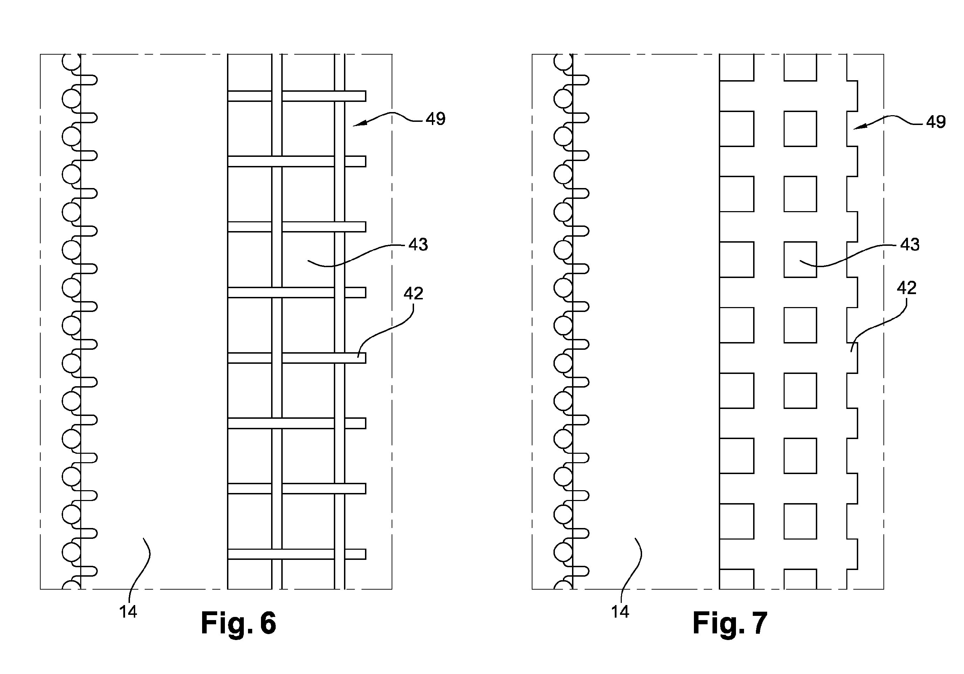

Comme déjà évoqué, le tissu ajouré peut notamment être formé par un textile tissé tel que représenté, aux figures 6 et 7. Tel que représenté à la figure 6, le tissu ajouré **49** peut également être réalisé par le tissage de fils **42** espacés les uns des autres de façon à délimiter des zones ajourées **43.** Comme précédemment, les zones ajourées **43** permettent à la matière du premier matériau thermoplastique de la nappe textile de fluer dans le tissu ajouré **49** du dispositif de guidage.

Tel que représenté à la figure 7, le tissu ajouré **49** est ensuite aplati par une opération de thermo-déformation des fils **42.** De cette manière, le tissu ajouré **49** peut présenter une très faible épaisseur inférieure à l'épaisseur initiale des fils **42.**

Les éléments disjoints de guidage rapportés au niveau de la première lisière de la bande textile **14** sont dans ce cas représentés sous la forme d'une pluralité des billes ou boules positionnées sur un fil. Ce fil présente également une pluralité de boucles permettant une solidarisation par couture avec la bande textile **14.**

Par ailleurs, et selon un autre mode de réalisation non représenté, les zones ajourées peuvent être ménagées dans un tissu ajouré au moyen d'un outil de découpe tel un emporte-pièce. De telles zones ajourées permettent alors, comme précédemment, au premier matériau thermoplastique de la nappe textile de fluer et d'occuper les volumes vides de ces zones ajourées. Dans ce cas, le tissu ajouré est formé par des fils tissés de manière serrée c'est-à-dire que chaque fil de chaîne ou de trame touche au moins localement le ou les fils qui lui sont contigus.

Tel que représenté à la figure 8, le tissu ajouré **69** peut également être formé par une grille **62** comportant un premier groupe d'une pluralité de fils juxtaposés parallèles et un second groupe de fils parallèles superposé sur le premier groupe avec une orientation des fils différente.

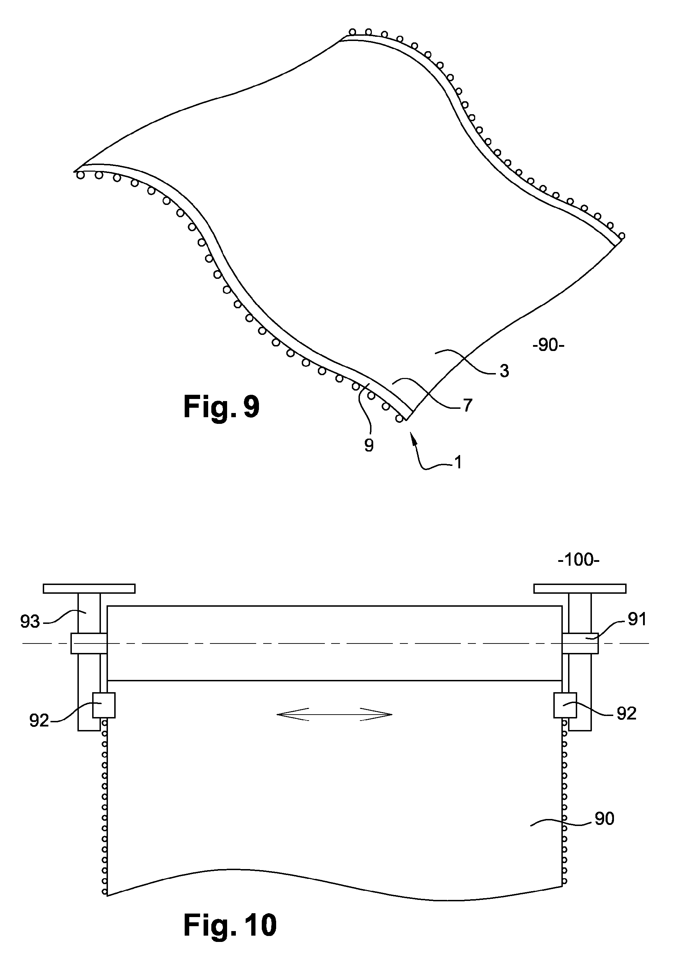

Tel que représenté à la figure 9, lorsque le dispositif de guidage **1** est solidarisé avec une lisière d'une nappe textile **3,** on obtient une toile de store de protection solaire **90.** La zone de solidarisation **7,** formée par un tissu ajouré **9,** est thermosoudée avec la nappe textile **3** et ne génère aucune surépaisseur au niveau la lisière de la nappe textile **3.**

Tel que représenté à la figure 10, une telle toile de store de protection solaire **90** peut être enroulée sur un axe **91** d'un ensemble formant store banne **100.** Par ailleurs, un tel ensemble **100** comporte également des moyens de mise en tension transversale **92** de la toile de store de protection solaire **90.** De tels moyens **92** permettent ainsi de guider les éléments disjoints de guidage de la toile **90** juste avant de procéder à l'enroulement de la toile **90** sur son axe. Les moyens **92** permettent également d'exercer un effort de traction sur la toile **90** et garantissent ainsi une suppression des plis de la toile **90** lors de son enroulement sur l'axe **91.**

Il ressort de ce qui précède qu'un dispositif de guidage, un store de protection solaire et un ensemble formant store banne conformes à l' invention présentent de nombreux avantages et notamment :
- ils permettent de supprimer les surépaisseurs dues à l'assemblage entre ces éléments au niveau des deux lisières de la nappe textile formant le store de protection solaire ;
- ils sont relativement simples à fabriquer et garantissent un guidage et un maintien optimum de la nappe textile par rapport à un châssis.

## Revendications

1. Dispositif de guidage (1) destiné à être solidarisé avec une lisière (2) d'une nappe textile (3) dont les fils sont enduits d'un premier matériau thermoplastique, ledit dispositif de guidage (1) permettant de former une ralingue et comportant :
- une bande textile (4, 14) ;
- des éléments disjoints de guidage (5) rapportés au niveau d'une première lisière (6) de ladite bande textile (4, 14) ;
- une zone de solidarisation (7, 17, 27, 37) avec la nappe textile (3) ;
ledit dispositif de guidage (1) étant **caractérisé en ce que** la zone de solidarisation (7, 17, 27, 37) est formée par un tissu ajouré (9, 19, 29, 39, 49, 59, 69) comportant un second matériau thermoplastique d'enduction, ledit second matériau thermoplastique étant thermosoudable avec ledit premier matériau thermoplastique recouvrant les fils de la nappe textile (3), et **en ce que** ledit tissu ajouré comporte des zones ajourées (43, 53) permettant le fluage du premier matériau thermoplastique de la nappe textile (3).

2. Dispositif selon la revendication 1, **caractérisé en ce que** la zone de solidarisation (7) est agencée au niveau d'une seconde lisière (8) de la bande textile (4) opposée à la première lisière (6), ladite bande textile (4) étant au moins partiellement constituée par ledit tissu ajouré(9).

3. Dispositif selon la revendication 1, **caractérisé en ce que** la bande textile (14) et ledit tissu ajouré (19) sont deux éléments disjoints solidarisés entre eux.

4. Dispositif selon la revendication 1, **caractérisé en ce que** le tissu ajouré (29) comporte une pluralité de fils (22) comportant chacun une âme (23) recouverte d'une gaine (24), ladite gaine étant formée par le second matériau thermoplastique.

5. Dispositif selon la revendication 1, **caractérisé en ce que** le tissu ajouré (29) comporte une pluralité de joncs (122) formés intégralement par le second matériau thermoplastique.

6. Dispositif selon la revendication 1, **caractérisé en ce que** le tissu ajouré (39) comporte une couche d'enduction (34) rapportée sur des fils (32), ladite couche d'enduction (34) étant formée par le second matériau thermoplastique.

7. Dispositif selon la revendication 1, **caractérisé en ce que** le tissu ajouré (49, 59) comporte une pluralité de fils (42, 52) tissés entre eux.

8. Dispositif selon la revendication 1, **caractérisé en ce que** le tissu ajouré (69) est formé par une grille ajourée (62)

9. Toile de store de protection solaire (90) **caractérisé en ce qu'**il comporte au moins un dispositif de guidage (1) selon l'une des revendications 1 à 8, et **en ce que**, au moins au niveau de la zone de solidarisation (7, 17, 27, 37), le tissu ajouré (9, 19, 29, 39, 49, 59, 69) du dispositif de guidage (1) est intégré dans l'épaisseur de la nappe textile (3).

10. Ensemble formant store banne (100) **caractérisé en ce qu'**il comporte une toile de store de protection solaire (90) selon la revendication 9 enroulée sur un axe (91) et des moyens de mise en tension transversale (92) permettant de guider les éléments disjoints de guidage de la toile (90) tout en assurant un effort de traction sur la toile (90).

## Patentansprüche

1. Führungsvorrichtung (1), die dazu bestimmt ist, fest mit einem Rand (2) eines textilen Flächengebildes (3) verbunden zu sein, dessen Fäden mit einem ersten thermoplastischen Material beschichtet sind, wobei es die Führungsvorrichtung (1) ermöglicht, einen Absetzstreifen zu bilden, und umfasst:
- ein textiles Band (4, 14);
- eigenständige Führungselemente (5), die im Bereich eines ersten Rands (6) des textilen Bands (4, 14) angebracht sind;
- einen Bereich (7, 17, 27, 37) zur festen Verbindung mit dem textilen Flächengewebe (3);
wobei die Führungsvorrichtung (1) **dadurch gekennzeichnet ist, dass** der Verbindungsbereich (7, 17, 27, 37) aus einem durchbrochenen Gewebe (9, 19, 29, 39, 49, 59, 69) gebildet ist, das ein zweites thermoplastisches Beschichtungsmaterial umfasst, wobei das zweite thermoplastische Material mit dem ersten, die Fäden des textilen Flächengebildes (3) bedeckenden thermoplastischen Material warmverschweißbar ist, und dass das durchbrochene Gewebe durchbrochene Bereiche (43, 53) umfasst, die das Fließen des ersten thermoplastischen Materials des textilen Flächengebildes (3) ermöglichen.

2. Vorrichtung nach Anspruch 1, **dadurch gekennzeichnet, dass** der Verbindungsbereich (7) im Bereich eines dem ersten Rand (6) entgegengesetzten zweiten Rands (8) des textilen Bands (4) ausgebildet ist, wobei das textile Band (4) zumindest teilweise durch das durchbrochene Gewebe (9) gebildet ist.

3. Vorrichtung nach Anspruch 1, **dadurch gekennzeichnet, dass** es sich bei dem textilen Band (14) und dem durchbrochenen Gewebe (19) um zwei eigenständige, miteinander verbundene Elemente handelt.

4. Vorrichtung nach Anspruch 1, **dadurch gekennzeichnet, dass** das durchbrochene Gewebe (29) eine Vielzahl von Fäden (22) umfasst, wovon jeder einen mit einer Hülle (24) bedeckten Kern (23) umfasst, wobei die Hülle durch das zweite thermoplastische Material gebildet ist.

5. Vorrichtung nach Anspruch 1, **dadurch gekennzeichnet, dass** das durchbrochene Gewebe (29) mehrere Stäbe (122) umfasst, die integral durch das zweite thermoplastische Material gebildet sind.

6. Vorrichtung nach Anspruch 1, **dadurch gekennzeichnet, dass** das durchbrochene Gewebe (39) eine auf die Fäden (32) aufgebrachte Überzugsschicht (34) umfass, wobei die Überzugsschicht (34) durch das zweite thermoplastische Material gebildet ist.

7. Vorrichtung nach Anspruch 1, **dadurch gekennzeichnet, dass** das durchbrochene Gewebe (49, 59) eine Vielzahl miteinander verwebter Fäden (42, 52) umfasst.

8. Vorrichtung nach Anspruch 1, **dadurch gekennzeichnet, dass** das durchbrochene Gewebe (69) durch ein durchbrochenes Gitter (62) gebildet ist.

9. Sonnenschutzrollotuch (90), **dadurch gekennzeichnet, dass** es mindestens eine Führungsvorrichtung (1) nach einem der Ansprüche 1 bis 8 umfasst, und dass zumindest im Bereich des Verbindungsbereichs (7, 17, 27, 37) das durchbrochene Gewebe (9, 19, 29, 39, 49, 59, 69) der Führungsvorrichtung (1) in die Dicke des textilen Flächengebildes (3) eingebunden ist.

10. Einheit, die eine Markise (100) bildet, **dadurch gekennzeichnet, dass** sie ein Sonnenschutzrollotuch (90) nach Anspruch 9, das auf eine Achse (91) aufgerollt ist, und Einrichtungen (92) zur Querzugspannungsbeaufschlagung umfasst, die es ermöglichen, eigenständige Führungselemente des Tuchs (90) zu führen und dabei eine Zugkraft auf das Tuch (90) sicherzustellen.

## Claims

1. Guide device (1) intended to be attached using the selvedge (2) of a textile layer (3) whose threads are coated with a thermoplastic whose threads are first coated with a thermoplastic material, said guide device (1) allows a sling to be formed, and comprises:
- a textile strip (4, 14);
- disjointed guide components (5) brought back to the level of the first selvedge (6) of the said textile band (4, 14);
- a locked zone with (7, 17, 27, 37) the textile layer (3);
the said guide device (1) being **characterised in that** the locked zone (7, 17, 27, 37) is formed by a mesh fabric (9, 19, 29, 39, 49, 59, 69) including a second thin thermoplastic coating which is heat sealable and which covers the threads of the textile layer (3), and **in that** the said mesh fabric includes the mesh zones (43, 53) that allow the creep of the first thermoplastic material of the textile layer (3).

2. Device according to Claim 1, **characterised in that** the locked zone (7) is laid out at the level of a second selvedge (8) of the textile strip (4) opposite the first selvedge (6), and is (4) at least partially constituted by the said mesh fabric (9).

3. Device in accordance with Claim 1, **characterised in that** the textile strip (14) and the said mesh fabric (19) are two disjoined components that are interconnected.

4. Device in accordance with Claim 1, **characterised in that** the mesh fabric (29) includes several threads (22), each including a core (23) covered with a sheath (24) which is formed by the second thermoplastic material.

5. Device in accordance with Claim 1, **characterised in that** the mesh fabric (29) includes several plain bands (122) made entirely of the second thermoplastic material.

6. Device in accordance with Claim 1, **characterised in that** the mesh fabric (39) includes a coating layer (34) brought back on the threads (32) and made of the second thermoplastic material.

7. Device in accordance with Claim 1, **characterised in that** the mesh fabric (49, 59) includes several intertwined threads (42, 52)

8. Device in accordance with Claim 1, **characterised in that** the mesh fabric (69) is made of a honeycomb mesh (62)

9. Solar protection awning fabric (90), **characterised in that** it includes at least one guide device (1) in accordance with one of the claims 1 to 8, and that at least as regards the 10 locked zone (7, 17, 27, 37), the mesh fabric (9, 19, 29, 39, 49, 59, 69) of the guide device (1) is integrated in the thickness of the textile layer (3).

10. Assembly forming the folding-arm awning (100) **characterised in that** it includes a solar protection awning fabric (90) according to Claim 9 rolled on an axle (91) and means of introducing transversal tension (92) helping guide the disjointed guide components of the fabric (90) while ensuring a traction force on the said sheet (90).
